# EUROPEAN PATENT APPLICATION

(11) **EP 2 546 218 A1**
(43) Date of publication of application: **16.01.2013**
(21) Application number: 12005150.3
(22) Date of filing: 12.07.2012
(51) Int. Cl.: C04B 41/45, C09C 1/00

(54) **Improved process for glazing and decorating an article with a decoration of ceramic toner printed in digital mode on a support sheet**

(30) Priority: 13.07.2011 IT BI20110005 U
(71) Applicant: Carbone, Vincenzo, 10154 Torino (IT); Marta, Maurizio, 10010 Banchette (TO) (IT)
(72) Inventor: Carbone, Vincenzo, 10154 Torino (IT); Marta, Maurizio, 10010 Banchette (TO) (IT)

(57) **Abstract**

A process (20) for glazing and decorating an article, in particular of ceramic material, comprising the following steps:
- providing a support sheet of paper (10) exhibiting along a respective printing surface, suitable for the formation of decals, a thin layer of glaze (10a):
- printing (21), by means of a digital printer (12) and the use of a ceramic toner (14), a decoration (13) on the printing surface (10a) of the support sheet of paper (10);
- separating (23), in a liquid bath (16) and from the support sheet of paper (10), the decal (13a) constituted by the decoration of ceramic toner (13) and the thin layer of glaze (10a);
- applying (24) the decal (13a) of toner ceramic and glaze on a raw article (18) to be decorated; and
- baking (25) the article (18) to permanently fix the decoration (13) on the article, so as to glaze and decorate it.

The decorating process of the invention has the significant advantage of having very fast execution times, since not including, differently from the known methods of decorating an article by using a decal formed by a decoration of ceramic toner, the step of applying and drying a colloidal substance on the decoration of ceramic toner, after having printed the decoration on a support sheet.

Furthermore, the process is such as to ensure a good quality of glazing of the final decorated article (18a).

## Description

### Technical Field

The present invention relates in general to the field of processes for glazing, enameling and decorating an article or a product, as typically but not exclusively an article of ceramic or the like, such as a tile.

More in particular the invention relates to a process for glazing and decorating a product with a decoration or image, comprising and made of a ceramic toner, which decoration has been previously printed in a digital way on a support sheet, wherein the process shows similarities and characteristics in common with the techniques of decoration based on screen printing and/or decal.

The invention also relates to a special support sheet of paper exhibiting along a respective printing surface a thin layer of glaze or enamel, which support sheet is adapted to be used in the above process of glazing and decoration of an article or product.

### Reference to related previous patent applications in which the Applicants are the designated inventors

The present patent application can be linked and referred to in some way to the following preceding three patent applications for inventions, in the name of BALTEA srl, in which the Applicants are designated as inventors:
- a first Italian patent application filed on 31 October 2005, with No. TO 2005 A 000769, entitled "Process for glazing and decorating an article comprising the use of a toner and paper sheet for use in such decoration process";
- a second Italian patent application filed on 22 February 2006, with No. TO 2006 A 000123, entitled "Process for glazing and decorating an article and special support sheet for use in such decoration process", and
- a third patent application filed on 20 August 2007, with No. BI07A000013, entitled "Improved process for decorating an article by applying on it an image printed with a ceramic toner".

These three previous patent applications for invention concern developments and research that preceded and provided the basis to the process of glazing and decoration of the present invention.

Therefore reference is made to the above listed previous patent applications as for any information, disclosed in such documents, that may be useful to complement and clarify the content and the disclosure of the present patent application for invention, in order both to improve its understanding and to frame correctly the technical context in which the process of glazing and decoration described in this new patent application has to be placed.

The three previous Italian patent applications, above mentioned, disclose respective processes for the glazing and/or decoration of an article of ceramic, which, even if being different from each other, have certain characteristics and phases in common.

In particular these disclosed three processes share a first phase in which an imagine or decoration is printed in a digital way, through the use of a ceramic toner, on a support sheet; a subsequent phase in which the support sheet with the image printed thereon is applied on a raw or crude product or article, to be decorated, and a final phase in which the article of ceramic is baked in a furnace, so as to consolidate the image and obtain the finished article decorated.

The support sheet of the printed image of ceramic toner can be constituted, as disclosed by the first of these three previous patent applications, of a support sheet of paper which consists of a matrix that contains paper and integrates a glaze or a similar material, whereby the support sheet during the final stage of baking of the product provides the necessary glaze material which is used for glazing the surface of the same product.

Alternatively, as disclosed by the second of these three patent applications, the support sheet bearing the printed image can be made with a special sheet made of glassy material, whereby, during the final stage of baking, the material of this sheets melts and is integrated with that of the raw product.

Still, as disclosed by the third patent application, the support sheet on which the decoration of ceramic toner is printed can be constituted by a usual sheet of paper, which bums completely and evaporates during the final stage of baking, thereby without providing any material intended to melt and to be integrated with that of the raw product.

### Background Art

As already mentioned, while discussing the previous three patent applications, it is known in the art to decorate a ceramic article by a process which comprises initially the formation and printing in a digital way, through the use of a ceramic toner, of an image on a support sheet; the subsequent application of the support sheet, with the image of ceramic toner printed thereon, on a raw article or product to be decorated, and the final baking of the article or product so as to obtain the final decorated article.

There are also known processes, for decorating an article of ceramic, which are based on or at least share relevant steps and phases that are typical of the technique of silk-screen printing, and more specifically of silk-screen printing by means of decal.

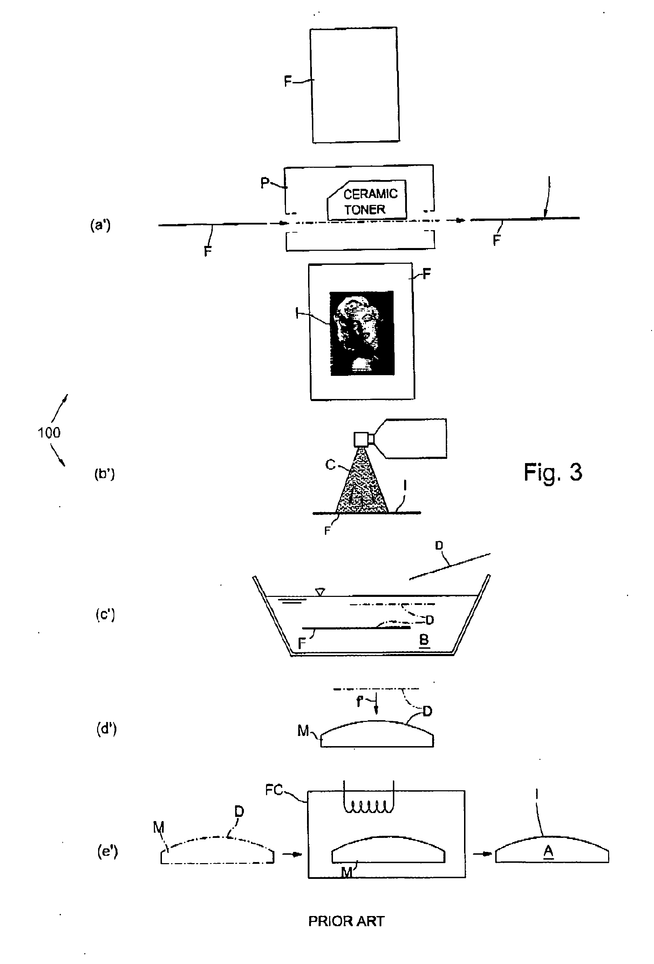

Figure 3 schematically illustrates one of these known processes of decoration, indicated by 100, which has characteristics and features in common with the processes of decoration based on siltc-screen printing and decal.

In particular, the process 100 comprises the use of a sheet of paper F for decals, i.e. suitable for the formation of decals, and an initial printing stage, indicated with (a'), to print on the paper sheet F, by means of a digital printer P, an image or decoration I, made of ceramic toner.

Then the process 100 includes, at a later stage indicated with (b'), the application, for example by spraying, of a colloidal substance or collodion C, which may contain a glaze and/or crystalline substances, on the image I that has been printed on the paper sheet F for decals.

In this way, the image I of ceramic toner, printed on the sheet F, is fixed and held together by the colloidal substance C, so as to form a decal D.

Later, after a drying stage to allow the colloidal substance C to dry, the sheet F is immersed, in a step (c'), B in a bath of water, where the image I, held together by the collodion C and forming the decal D, is detached from the sheet F.

Subsequently, at a stage (d') and as indicated by an arrow f', the decal D is applied on an article of ceramic M, to be decorated.

Finally, the article M is baked, in a step (e') and at a suitable temperature, in a baking furnace FC, in order to obtain the final article A decorated with the image **I.**

However this known process of decoration is not free from limitations and problems, which would require to be overcome.

In particular this process has the drawback of implying operative times, for the application and drying of the colloidal substance on the ceramic toner image that is printed on the paper support sheet, which are not negligible, being able to vary for example In the case of the drying time from a few minutes up to several hours, so as to adversely affect the performance of the process of decoration and the final manufacturing cost of the decorated products.

Furthermore, the use, in this or other known methods, of tools and equipments which are typical of the silk-screen printing technique involves additional costs for the continuous maintenance that these equipments require.

### Summary of the invention

Therefore a first object that the present invention aims to achieve is to provide a new, useful and advantageous process for glazing and decorating a product or an article, typically of ceramic material, with a decoration made of and comprising a ceramic toner, which process exhibits significant improvements, such as a fast execution, so as to remedy the above mentioned drawbacks of the prior art, and in particular does not include, in the preparation phase of the decal to be applied on the article to be decorated, the costly and often long phase of application and drying of the colloidal substance on the image of ceramic toner printed on the support sheet.

A second object of the present invention is to develop a process for glazing and decorating an article of ceramic, which process, besides being fast and involving reduced costs of execution, it is also such as to ensure a good quality of glazing in the final manufactured decorated article.

The above objects are achieved by the process for glazing and decorating an article having the characteristics defined by the first main independent claim.

Specific embodiments of the decoration process of the invention are defined by the dependent claims.

At the base of the present invention there is the intuition and the finding, from the inventors, that it was possible to achieve a substantial saving of time, for glazing and decorating an article of ceramic, by eliminating the stage of applying the colloidal substance and the successive drying of it on the image of ceramic toner printed on the support sheet, and that, at the same time, it was possible to obtain a good quality of the glazing in the final decorated article, by using, as a basic support sheet for the printed image of ceramic toner, a sheet of paper for decals suitably provided along a respective printing surface of a thin layer of glaze.

Numerous and important are the benefits and advantages, already partially anticipated, that are associated with the process of glazing and decoration of the invention, such as those listed below:
- high speed of execution;
- high quality of both the final glazing of the article and the decoration that is reproduced on it;
- effective utility and high efficiency even in the case of production of a limited number of pieces glazed and decorated;
- use in the process of simple equipments and tools having low maintenance costs;
- a low production cost.

### Brief Description of Drawings

These and other objects, characteristics and advantages of the present invention will appear clearly from the following description of a preferred embodiment thereof, given purely by way of a non/limiting example with reference to the accompanying drawings, wherein:
Fig 1 is a figurative diagram illustrating an improved process, conforming to the present invention, for glazing and decorating an article with a decoration of ceramic toner, and the means and equipments that are used to implement such a process of glazing and decoration;
Fig 1A is a sectional view, in an enlarged scale, of a support sheet, coated with a thin layer of glaze or enamel, used in the process of Fig 1;
Fig 2 is a flow chart representing the various steps of the glazing and decoration process of Fig 1; and
Fig 3 is a figurative diagram illustrating a process, according to the prior art, to decorate an article.

### Description of a preferred embodiment of the process of glazing and decoration of the invention

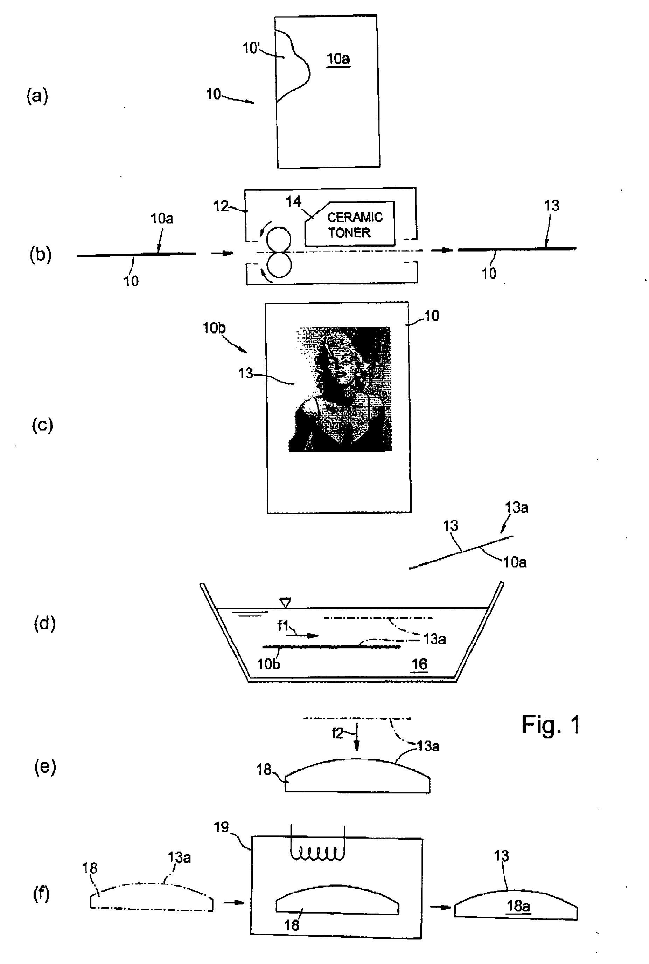

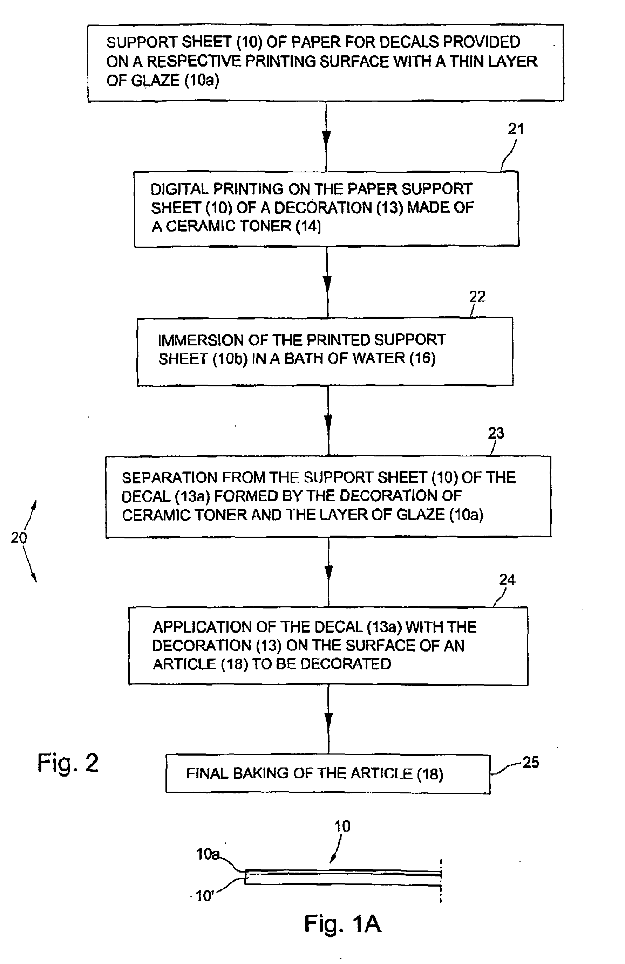

With reference to the diagram of Fig 1 and the corresponding flow chart of Fig 2, a process for glazing and decorating an article according to the present invention is generally indicated with 20.

The process 20 comprises, as initial and basic element, a support sheet, indicated with 10 and shown schematically in section (a) of Fig 1.

In particular this support sheet 10 is constituted by a sheet of paper 10' for decals, i.e. of the type having a respective surface adapted to the formation of decals and/or suitably treated to allow the formation of decals, wherein the paper of sheet 10' is provided and coated, along this surface, with a thin layer, indicated by 10a. of glaze or enamel.

The glaze layer 10a is firmly fixed on the surface of the paper sheet 10', suitable for the formation of decals, by using colloidal substances or the like, for example sprayed on the sheet of paper 10' after the laying of the glaze layer 10a, or by making use of silk-screen printing techniques.

For clarity, Fig 1A shows in section the structure of the support sheet 10 including the paper sheet 10' and the layer of glaze 10a provided and arranged on the surface, suitable for decals, of the paper sheet 10'.

It should be noted that the term "glaze" or "enamel", used to indicate the material that is laid on and coats the surface of the paper sheet 10, has to be construed and interpreted, in the context of the present invention, as including and meaning any substance, compound or material intended to be applied, in a layer form, on a surface of a raw tile or in general of any other article or product in a raw state, and to be subsequently fixed on such surface, during a baking phase, in order to impart to the tile or article those characteristics of brightness, sheen and appearance that are typical of a tile or a finished product.

As said, the support sheet 10 is of the type suitable for the formation of decals, and for this purpose it is suitably provided, along the surface on which the layer of glaze or enamel is laid, with a layer of a material soluble in water, whose function will be better understood below.

The process 20 comprises an initial printing stage or step, shown schematically in section (b) of Fig. 1 and corresponding to block 21 of the flow chart of Fig. 2, during which the support sheet 10 is fed to a digital printing system, indicated generally with 12, where the support sheet 10 is printed so as to receive on its printing surface, corresponding to the thin layer of glaze 10a, an image or decoration 13, made of a toner 14 and corresponding to the image or decoration to be realized on the final product.

In particular, the toner 14 that is used to print the image 13 on the support sheet 10 is of a ceramic type, i.e. it is a toner that includes, in comparison to conventional toner usually used exclusively for printing, further and specific additional components, such as pigments and dyes, which constitute the substances and additives that are required to form a decoration, in particular colored, on a ceramic material or the like.

In this way the support sheet 10b, with the decoration or image 13 printed thereon, is obtained, as shown in section (c) of Fig 1.

Subsequently, the process of decoration 20 includes a step 22 during which, as shown schematically in section (d) of Fig 1, the printed support sheet 10b is immersed in a water bath 16, where the layer soluble in water, provided on the printing surface of the support sheet 10, melts.

Then, during a step 23, the decoration 13 of ceramic toner is easily separated and removed, in the form of a decal 13a, from the support sheet 10, in particular by sliding the decal 13a on the surface of the support sheet 10, as indicated by an arrow f1 and represented by dashed-and-dotted line in section (d) of Fig 1.

The decal 13a, which in this way is detached from the support sheet 10, is constituted by both the image or decoration 13 of ceramic toner and the layer of glaze initially provided on the surface of the paper support sheet 10.

Then, as shown schematically in section (e) of Fig 1, the decoration 13, i.e. the decal 13a of ceramic toner and glaze, is applied by pressure and in a known way, during a step 24, on a crude or raw product 18 to be decorated, typically of ceramic, as indicated by an arrow f2.

Finally, in a final step 25, shown schematically in section (f) of Fig 1, the article or product 18 is baked in a known manner, in particular at a temperature between 400 to 1,250 °C depending on the case, in a furnace 19, where the ceramic toner and the glaze that make up the decal 13a with the decoration 13 are integrated, by melting, into the ceramic structure of the article 18, so as to obtain the final article 18a, glazed and decorated, i.e. ready for use.

It is therefore clear, from what described, that the present invention fully achieves the purposes that had been set, and in particular proposes a new process for the glazing and decoration of an article, in particular of ceramics, which process is characterized by a reduced execution time and a high efficiency, as well as by implying the use of simple and inexpensive equipments, having a non-costly maintenance.

It is also clear that the process for the glazing and decoration so far described may be subject to developments, changes and/or improvements without departing from the scope of the present invention.

For example the process of glazing and decoration of the invention can be integrated with the use of appropriate substances suitable to confer special properties of luminescence, in particular fluorescence or phosphorescence, to the decoration made on the article, wherein these fluorescent or phosphorescent substances can be used and applied in various ways as part of the process of glazing and decorating.

For example these fluorescent or phosphorescent substances may be already part of and included in the composition of the raw materials that constitute the ceramic toner with which the decoration is printed on the support sheet.

Furthermore, these fluorescent or phosphorescent substances can be applied on the printing surface, of the support sheet, provided to receive and to be printed with the decoration of ceramic toner, and in particular they can be part of the thin layer of enamel or glaze which is provided along that printing surface.

Still these fluorescent or phosphorescent substances can be applied, for example by spraying, on the decoration of ceramic toner, once printed on the support sheet.

Again, these fluorescent or phosphorescent substances may be part of a composition, for example including a glaze in addition to these substances, which is applied on the decoration of ceramic toner, once printed on the support sheet.

Therefore in these embodiments of the process of decoration there are obtained articles, glazed and decorated, that, through the use of these fluorescent or phosphorescent substances, are also visible in the dark or poor lighting conditions.

## Claims

1. A process (20) for glazing and decorating an article, comprising the following succession of steps:
- providing a support sheet of paper (10) exhibiting along a respective printing surface, suitable for the formation of decals, a thin layer of glaze (10a);
- printing (21), by means of a digital printer (12) and the use of a ceramic toner (14), a decoration (13) or image on said printing surface (10a) of said support sheet of paper (10);
- separating (23), in a liquid bath (16) and from said support sheet (10), the decal (13a) constituted by the decoration (13) of ceramic toner and the thin glaze layer (10a);
- applying (24) said decal (13a) of ceramic toner (14) and glaze on a crude or raw product or article (18) to be decorated: and
- baking (25) said article (18), so as to stably fix said decoration (20) on the surface of said article, thereby glazing and decorating it.

2. The process (20) for glazing and decorating an article according to claim 1, wherein said support sheet (10) is provided along the respective printing surface (10a) with a thin layer of water soluble material, to allow the formation of decals.

3. The process (20) for glazing and decorating an article according to claim 1 or 2, wherein said thin layer of glaze (10a) is fitted and fixed on the printing surface of said support sheet (10) by using colloidal substances .

4. The process (20) for glazing and decorating an article according to any one of the Preceding claims, wherein said decal (13a) of ceramic toner (14) and glaze is applied by pressure on the surface of the article (18) to be decorated.

5. The process (20) according to any one of the preceding claims, wherein the step of printing (21) said decoration (13) of ceramic toner (14) on said support sheet (10) is carried out by a digital printing system (12), in particular operating with reprographic printing technology and/or of the laser or LED type.

6. The process for glazing and decorating an article according to any one of the preceding claims, comprising the use of luminescent substances, in particular fluorescent or phosphorescent, suitable to make visible even in the dark the decoration made on the article.

7. The process for glazing and decorating an article according to claim 6, wherein the fluorescent or phosphorescent substances are included in the composition of the ceramic toner with which the decoration or Image is printed on the support sheet.

8. The process for glazing and decorating an article according to claim 6, wherein the fluorescent or phosphorescent substances are applied on the printing surface, of the support sheet, provided for receiving the decoration of ceramic toner, or said fluorescent or phosphorescent substances are applied on the decoration or image that is printed in digital way on the paper support sheet.

9. A product or article (18a), particularly but not exclusively of ceramic material, decorated according to the process of decoration according to any one of claims 1 to 8.

10. Support sheet of paper (10) exhibiting along a respective printing surface, suitable for the formation of decals, a thin layer of glaze (10a), said support sheet of paper being for use in a process for glazing and decorating an article according to any one of claims 1 to 8.
